(19) Europäisches Patentamt / European Patent Office / Office européen des brevets

(11) **EP 2 784 140 A1**

(12) **EUROPEAN PATENT APPLICATION**

(43) Date of publication:
**01.10.2014 Bulletin 2014/40**

(51) Int Cl.:
***C09J 7/02*** (2006.01)

(21) Application number: **14158049.8**

(22) Date of filing: **06.03.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.03.2013 CN 201310107919**

(71) Applicant: **NITTO DENKO CORPORATION Ibaraki-shi, Osaka 567-8680 (JP)**

(72) Inventors:
• **DONG, Qinli**
  **201613 Songjiang (CN)**

• **PENG, Weizhong**
  **201613 Songjiang (CN)**
• **KAWABE, Shigeki**
  **Ibaraki-shi, Osaka 567-8680 (JP)**
• **TERASHIMA, Tadashi**
  **Ibaraki-shi, Osaka 567-8680 (JP)**

(74) Representative: **Grünecker, Kinkeldey, Stockmair & Schwanhäusser**
  **Leopoldstrasse 4**
  **80802 München (DE)**

(54) **Pressure-sensitive adhesive tape for electrochemical device**

(57)    Provided is a PSA tape for an electrochemical device, which can be peeled off rapidly and will not damage adherend materials or the PSA tape itself, or will not leave adhesive residues, when an adhesion defectiveness occurs during the manufacturing and processing of an electrochemical device, especially an electrolytic capacitor or a battery. The PSA tape comprises a substrate and a PSA layer placed on at least one face of the substrate. In the PSA tape, an anchoring strength of the PSA layer to the substrate is 7.0 N/10 mm or more.

[Fig. 1]

**Description**

CROSS-REFERENCE

The present application claims priority based on Chinese Patent Application No. 201310107919.6 filed on March 29th, 2013, and the entire content of this application is incorporated herein by reference.

BACKGROUND OF THE INVENTION

1. Field of the Invention

The present invention relates to a pressure-sensitive adhesive (PSA) tape for an electrochemical device. In particular, the present invention relates to a PSA tape, for instance, for use in a part with which an electrolyte may possibly contact during an assembling of an electrochemical device such as an electrolytic capacitor, a lithium ion battery, etc.

2. Description of the Related Art

During the manufacturing and processing of an electrochemical device, especially an electrolytic capacitor, a battery, etc., a PSA tape is applied widely for termination of a battery tab, insulative protection of an electrode plate, reinforcement of a battery case and so on. Related piror art references include Japanese Unexamined Patent Publication No. H11-176476.

SUMMARY OF THE INVENTION

In the conventional manufacturing and processing of a battery, the PSA tape used for insulation, termination and reinforcement of a battery case has a relatively large adhesive strength. Thus, when it needs to be adjusted, for instance, to be peeled and adhered again with respect to the PSA tape once surely adhered, an adhered part (e.g. materials) of an adherend (e.g. battery) will be damaged during peeling of the PSA tape from the adherend. Such cases of peeling and adhering again include a case where the state or position of adhesion is defective, or a case where an opposite adhesion to PSA faces of the PSA tape occurs, etc. This will result in that the battery is disposed as a rejected product, or that the PSA tape is torn and discarded, thereby bringing about unnecessary waste, reducing the efficiency and reducing the economic benefit. Currently, there is no PSA tape in the field which can satisfy the requirements for rapid adjustment (e.g. peel and adhesion again) without damaging the materials of the adherend such as a battery and the PSA tape.

In the manufacturing of an electrochemical device, a PSA tape is often used. For example, in the manufacturing of a lithium ion battery, a PSA tape is used for various purposes, such as preventing a separator from being pierced and active materials from detachment due to foreign substances, burrs, etc. The PSA tape is also used for fixing end parts of a wound separator when a wound body comprising an electrode plate, a separator and the like is loaded into a battery case.

A separator used in the manufacturing of an electrochemical device is often a porous polyethylene (PE) or polypropylene (PP) film. A PSA tape used is mainly composed of a substrate and a PSA layer. As a PSA for forming the PSA layer, from the point of crosslinking with an external crosslinking agent to obtain excellent adhesive properties, an acrylic polymer obtained by copolymerization of alkyl (meth)acrylate and a functional group-containing monomer is often used.

In use of a PSA tape as described above, when adhering the PSA tape to an electrode plate, a separator or the like as an adherend, the PSA tape sometimes needs to be peeled off because it is adhered mistakenly or it is desired to correct the position thereof. In such a case, the PSA tape cannot be peeled easily, and the situation may occur that a PSA of a PSA layer remains on the electrode plate, the separator and the like as the adherend, or that a too strong adhesive strength damages the electrode plate, the separator and the like. Thus, the member materials cannot be used any more. There is such a problem on operationality and economy in an adhesion. Desired is a PSA tape which will not leave adhesive residues when being peeled off after having been adhered.

In view of the above-mentioned problems, the present inventors have carried out in-depth researches, and they discovered that the adhesion operationality of a PSA tape is further improved by setting an anchoring strength of a PSA layer within a specific range. The present invention is completed on the basis of the above-mentioned findings. In other words, an objective of the present invention is to provide a PSA tape for an electrochemical device, which can be peeled off rapidly and will not damage adherend materials or the PSA tape itself, or will not leave adhesive residues, when an adhesion defectiveness occurs during the manufacturing and processing of an electrochemical device, especially an electrolytic capacitor or a battery.

According to the present invention, a PSA tape for an electrochemical device is provided. The PSA tape comprises a substrate and a PSA layer placed on at least one face of the substrate. In the PSA tape, an anchoring strength of the PSA layer to the substrate is 7.0 N/10 mm or more.

In a preferable embodiment of the PSA tape for an electrochemical device disclosed herein, the gel fraction of the PSA layer is 50% by weight or higher and lower than 100% by weight.

In a preferable embodiment of the PSA tape for an electrochemical device disclosed herein, the PSA tape exhibits an adhesive strength of 0.1 N/10 mm to 4 N/10 mm.

In a preferable embodiment of the PSA tape for an electrochemical device disclosed herein, the PSA tape exhibits a higher anchoring strength than an adhesive strength, and the difference between the anchoring strength and the adhesive strength is 5.0 N/10 mm or more.

In a preferable embodiment of the PSA tape for an electrochemical device disclosed herein, the PSA layer is composed of an acrylic PSA containing an acrylic polymer obtainable by polymerizing an alkyl (meth)acrylate monomer and a monomer containing a functional group. The functional group is capable of reacting with a crosslinking agent. It is preferable that the functional group capable of reacting with a crosslinking agent is a hydroxyl group or carboxyl group.

It is preferable that the acrylic PSA (PSA composition) further contains a crosslinking agent. It is more preferable that an amount of the crosslinking agent is 0.01 to 20 parts by weight with respect to 100 parts by weight of the acrylic polymer.

In a preferable embodiment of the art disclosed herein, the electrochemical device comprises a porous film as an adherend.

According to the present invention, an electrochemical device is also provided. The electrochemical device is manufactured by using the PSA tape for an electrochemical device disclosed herein.

When a PSA tape for an electrochemical device (hereinafter referred to simply as "PSA tape") provided by the present invention is used in the manufacturing and processing of an electrochemical device, especially an electrolytic capacitor or a battery, it can easily be peeled off from an adherend after having been adhered, without damaging adherend materials or the PSA tape itself, and without leaving adhesive residues on an adherend. Therefore, according to the present invention, a PSA tape, which is excellent in operationalitty and capable of avoiding unnecessary waste, and thus improves economic benefits, is realized.

BRIEF DESCRIPTION OF THE DRAWINGS

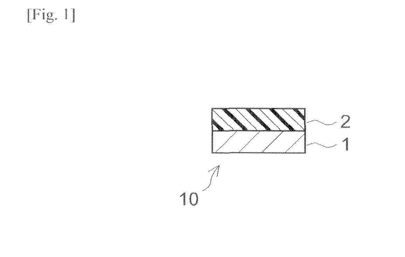

Fig. 1 shows a cross-sectional view schematically illustrating the constitution of a PSA tape according to an embodiment.

DETAILED DESCRIPTION OF THE INVENTION

Preferred embodiments of the present invention are described below. Matters necessary to practice this invention other than those specifically referred to in this description may be understood as design matters based on the conventional art in the pertinent field for a person of ordinary skill in the art. The present invention can be practiced based on the contents disclosed in this description and common technical knowledge in the subject field. The concept of the "PSA tape" in this description encompasses a PSA tape generally referred to a PSA sheet and a PSA film which is perceived to be thinner than a PSA sheet.

The PSA tape disclosed herein comprises a substrate and a PSA layer provided on at least one face of the substrate. A typical constitution example of such a PSA tape is schematically illustrated in Fig. 1. This PSA tape 10 comprises a resin substrate sheet 1 and a PSA layer 2 provided on a first face (one face) thereof. When used, this PSA tape 10 is adhered over the PSA layer 2 side to a prescribed area of an adherend. Prior to use (i.e. before adhered to the adherend), PSA tape 10 may typically be present in such a state where the surface (adhering face) of the PSA layer 2 is protected with a release liner (not shown in figure) having a release face at least on the PSA layer 2 side. Alternatively, it may be present in such a state where, with substrate I having a release face on the other face (the back face of the surface on which PSA layer 2 is provided), PSA tape 10 is wound in a roll so that the other face contacts the PSA layer 2 and protects the surface. Alternatively, a PSA tape may be a double-sided PSA tape comprising a substrate and PSA layers provided on both faces of the substrate, respectively.

< Substrate >

A fiber-based substrate, a paper-based substrate, a plastic-based substrate, a rubber-based substrate, a foam-based substrate or a lamination of these, etc. can be used as a substrate. As raw materials for a plastic-based substrate, for example, the following can be listed: polyesters (polyethylene terephthalate (PET), polyethylene naphthalate, polybutylene terephthalate, polybutylene naphthalate,etc.), polyolefins (polyethylene (PE), polypropylene (PP), polymethyl pentene, an ethylene-propylene copolymer, etc.), polyvinyl alcohol, polyvinylidene chloride, polyvinyl chloride, vinyl chloride-vinyl acetate copolymers, polyvinyl acetate, polyamides, polyimides, celluloses, fluorine-containing resins, polyethers, polyether amides, polyether nitriles, polyetheretherketones, polyphenylene sulfides, polystyrene-based resins (polystyrene, etc.), polycarbonates, polyether sulfones, etc. These can be used alone, and can also be used in a combination of two species or more.

In term of excellent heat resistance, a substrate using a resin selected from polyesters such as PET and the like, polyolefins such as PP and the like, and polyimide as raw material is especially preferred.

A substrate can have a single layer structure, and can also have a multilayered structure of two or more layers. When a substrate has a multilayered structure of two or more layers, each layer thereof can have the same composition, or the layers can be a combination of layers having different compositions each other.

In addition, according to requirements, in order to improve an anchoring strength of a PSA layer to a substrate, a common surface treatment, such as chromate treatment, ozone treatment, flame treatment, high-voltage electric shock treatment, ionizing radiation treatment and other chemical or physical surface treatments, can be carried out to the surface of the substrate. For example, the surface tension of the substrate is preferably 35 mN/m or more. By designing the surface tension thereof within the above-mentioned range, tight adhesiveness between a substrate and a PSA layer can be improved, and adhesive residues left on an adherend can preferably be prevented when a PSA tape is peeled off.

The surface tension of a substrate is tested based on a testing method of Standard GB/T 14216-2008 or ISO 8296: 2003. A particular testing method for the surface tension of a substrate is as follows:

(Testing method for surface tension)

A test material is placed into a standard laboratory atmosphere with a temperature of 23°C $\pm$ 2°C and a humidity of 50% $\pm$ 5%. The test material is horizontally placed on a smooth plane, and is coated once with a coating width of about 10 mm by moving an absorbent cotton stick dipped with a test mixture liquid on the test material horizontally in one direction. A liquid thin film formed by the mixture liquid is observed under lamp light, and if the duration for which the liquid thin film keeps its original state exceeds 2 seconds, a mixture liquid with a larger surface tension is used to repeat the test on a new test sample, until the duration for which the liquid thin film keeps its original state is close to 2 seconds. If the duration for which the liquid thin film keeps its original state is less than 2 seconds, a mixture liquid with a lower surface tension is used for the test, so that the duration for which the liquid thin film keeps its original state is close to 2 seconds. This operation is repeated to select a test mixture liquid which can wet the surface of the test material with the duration of 2 seconds accurately. New cotten stick is used for each test. The operation for selecting a test mixture liquid which can wet the surface of the test material with the duration of 2 seconds accurately must be carried out at least three times. Using the test mixture liquid selected as above, a surface tension is measured in accordance with the above standard. As a test mixture liquid, mixture liquids having different wetting tension in stages are used in accordance with the above standard. In particular, used are mixture liquids prepared by mixing ethylene glycol monoethyl ether, formamide, methanol and water in stages in accordance with the above standard.

There is no particular limitation on the thickness of a substrate. The thickness is preferably 8 $\mu$m to 100 $\mu$m, and more preferably about 10 $\mu$m to 50 $\mu$m. If the thickness of a substrate is too small, the PSA tape may not be strong enough, impairing the practicality thereof. If the thickness of a substrate is too large, relative volume thereof tends to be too large in an electrochemical device, making it difficult to adapt to high capacity of an electrochemical device.

< PSA layer >

A PSA layer disclosed herein is preferably composed of an acrylic PSA containing at least an acrylic polymer as a base polymer. The term "base polymer" of a PSA refers to the primary component among rubbery polymers (polymers that exhibit rubber elasticity in a room temperature range) contained in the PSA, that is, a component accounting for 50 % by mass or more of all rubbery polymers. The term "acrylic polymer" refers to a polymer (copolymer) containing as a monomer unit constituting the polymer a monomer unit derived from a monomer having at least a (meth)acryloyl group in a molecule.

A monomer component for composing the acrylic polymer preferably comprises 80% by weight or more of alkyl (meth)acrylate as a main monomer with respect to the total amount (100% by weight) of monomer components for composing the acrylic polymer.

Examples of the alkyl (meth)acrylate include, for example, (meth)acrylates having straight-chain or branched-chain alkyl groups with a carbon number of 30 or lower, such as methyl group, ethyl group, propyl group, isopropyl group, n-butyl group, tert-butyl group, isobutyl group, pentyl group, isopentyl group, hexyl group, heptyl group, cyclohexyl group, 2-ethylhexyl group, octyl group, isooctyl group, nonyl group, isononyl group, decyl group, isodecyl group, undecyl group, lauryl group, tridecyl group, tetradecyl group, stearyl group, octadecyl group, etc. These alkyl (meth)acrylates can be used alone, or can also be used in a combination of two species or more.

In this description, "(meth)acrylic" refers to "acrylic" and/or "methacrylic". Likewise, the term "(meth)acrylate" refers collectively to acrylate and methacrylate, and the term "(meth)acryloyl" refers collectively to acryloyl and methacryloyl.

A monomer component constituting the acrylic polymer preferably comprises a monomer (a functional group-containing monomer) having a functiional group in addition to the alkyl (meth)acrylate. As a functional group-containing monomer, for example, the following can be listed: a carboxyl group-containing monomer such as (meth)acrylic acid, itaconic acid, maleic acid, fumaric acid, crotonic acid, isocrotonic acid, etc. (also including a monomer containing an acid anhydride group such as maleic anhydride, itaconic anhydride, etc.); a hydroxyl group-containing monomer such as a hydroxyalkyl (meth)acrylate (2-hydroxyethyl (meth)acrylate, 2-hydroxypropyl (meth)acrylate, 3-hydroxypropyl (meth)acrylate, 4-hydroxybutyl (meth)acrylate, 6-hydroxyhexyl (meth)acrylate, etc.), vinyl alcohol, allyl alcohol, etc.; an amide group-containing monomer such as (meth)acrylamide, etc.; an N-substituted-amide group-containing monomer such as N-methyl (meth)acrylamide, N-ethyl (meth)acrylamide, N,N-dimethyl (meth)acrylamide, N-tert-butyl (meth)acrylamide, N-hydroxymethyl (meth)acrylamide, N-methoxymethyl (meth)acrylamide, N-ethoxymethyl (meth)acrylamide, N-butoxymethyl (meth)acrylamide, N-octyl acrylamide, N-hydroxyethyl acrylamide, N-methylolpropane (meth)acrylamide, etc.; an amino group-containing monomer such as aminoethyl (meth)acrylate, dimethylaminoethyl (meth)acrylate, diethylaminoethyl (meth)acrylate, dimethylaminopropyl (meth)acrylate, tert-butylaminoethyl (meth)acrylate, etc.; etc. In the functional group-containing monomers, from the viewpoint of easy peeling and excellent anchoring strength to a substrate, the carboxyl group-containing monomer and the hydroxyl group-containing monomer are preferred, and from the viewpoint of excellent initial adhesiveness, the carboxyl group-containing monomer (e.g. acrylic acid (AA)) is particularly preferred.

With respect to the total amount (100% by weight) of monomer components for composing the acrylic polymer, the content of the functional group-containing monomers is generally, for example, about 0.5% to 18% by weight, and preferably about 1% to 15% by weight. When the functional group is a carboxyl group, the content of the monomer containing the functional group is suitably about 1% to 18% by weight, preferably 10% to 16% by weight, and particularly preferably 12% to 16% by weight. When the functional group is a hydroxyl group, the content of the monomer containing the functional group is suitably about 0.5% to 10% by weight, preferably 4% to 10% by weight, and particularly preferably 5% to 10% by weight.

In the monomer components for forming the acrylic polymer, in addition to the main monomers and functional group-containing monomers, other copolymerizable monomers can also be contained. As the copolymerizable monomers, for example, the following can be listed: an alkoxyalkyl (meth)acrylate-based monomer such as methoxyethyl (meth)acrylate, ethoxyethyl (meth)acrylate, etc.; a maleimide-based monomer such as N-cyclohexyl maleimide, N-isopropyl maleimide, N-lauryl maleimide, N-phenyl maleimide, etc.; an itaconimide-based monomer such as N-methyl itaconimide, N-ethyl itaconimide, N-butyl itaconimide, N-octyl itaconimide, N-2-ethylhexyl itaconimide, N-cyclohexyl itaconimide, N-lauryl itaconimide, etc.; a succinimide-based monomer such as N-(meth)acryloyloxymethylene succinimide, N-(meth)acryloyl-6-oxo-hexamethylene succinimide, N-(meth)acryloyl-8-oxo-octamethylene succinimide, etc., and so on. These monomers can be used alone, or can also be used in a combination of two species or more.

Furthermore, as the copolymerizable monomers, for example, the following can also be listed: a vinyl-based monomer such as vinyl propionate, N-vinyl pyrrolidone, methylvinyl pyrrolidone, vinyl pyridine, vinyl piperidone, vinyl pyrimidine, vinyl piperazine, vinyl pyrazine, vinyl pyrrole, vinyl imidazole, vinyl oxazole, vinyl morpholine, N-vinyl carboxylic acid amides, styrene, $\alpha$-methylstyrene, N-vinyl caprolactam, etc.; a cyanoacrylate-based monomer such as (meth)acrylonitrile, etc.; an epoxy group-containing acrylic monomer such as glycidyl (meth)acrylate, methyl glycidyl (meth)acrylate, etc.; a glycol-based acrylate monomer such as polyethylene glycol (meth)acrylate, polypropylene glycol (meth)acrylate, methoxy ethylene glycol (meth)acrylate, methoxy polypropylene glycol (meth)acrylate, etc.; tetrahydrofurfuryl (meth)acrylate, a fluorine-containing (meth)acrylate, silicone (meth)acrylate, etc. These copolymerizable monomers can be used alone, or can also be used in a combination of two species or more.

The copolymerizable monomers can be used according to the requirements for the adjustment of PSA characteristics and so on. From the viewpoint of the stability of the acrylic polymer during polymerization, with respect to 100 parts by weight of the alkyl (meth)acrylate, the amount of the copolymerizable monomers used is, for example, preferably 50 parts by weight or below.

An acrylic polymer can be prepared by polymerizing the monomer components by means of a well-known or conventional polymerization method. For example, the following methods can be listed: a solution polymerization method, an emulsion polymerisation method, a bulk polymerization method, a polymerization method using irradiation of active energy rays (an active energy ray polymerization method), etc. Among these, in consideration of the transparency, water resistance, cost, etc., the solution polymerization method is preferred.

Various ordinary solvents can be used during the solution polymerization. As such a solvent, for example, the following organic solvents can be listed: esters such as ethyl acetate, n-butyl acetate, etc.; aromatic hydrocarbons such as toluene, benzene, etc.; aliphatic hydrocarbons such as n-hexane, n-heptane, etc.; alicyclic hydrocarbons such as cyclohexane, methylcyclohexane, etc.; ketones such as methyl ethyl ketone, methyl isobutyl ketone, etc., and so on. These can be used alone or used in a combination of two or more.

During polymerization of the monomer components, a polymerization initiator can be used. There is no particular limit on the polymerization initiator. The polymerization initiators can be appropriately selected from the well-known or conventional initiators for use. For example, the following oil-soluble polymerization initiators can be listed: an azo-based polymerization initiator such as 2,2'-azodiisobutyronitrile (AIBN), 2,2'-azobis(4-methoxy-2,4-dimethylvaleronitrile), 2,2'-azobis(2,4-dimethylvaleronitrile), 2,2'-azobis(2-methylbutyronitrile), 1,1'-azobis(cyclohexane-1-carbonitrile), 2,2'-azo-bis(2,4,4-trimethylpentane), dimethyl-2,2'-azobis(2-methylpropionate), etc.; a peroxide-based polymerization initiator such as benzoyl peroxide, tert-butyl hydroperoxide, di-tert-butyl peroxide, tert-butyl peroxy benzoate, dicumyl peroxide, 1,1-bis(tert-butylperoxy)-3,3,5-trimethylcyclohexane, 1,1-bis(tert-butylperoxy)cyclododecane, etc., and so on. These polymerization initiators can be used alone, or can also be used in a combination of two species or more. There is no particular limit on the amount of the polymerization initiator used, and the amount can be applied within a conventionally available range for polymerization initiator.

An acrylic polymer is preferably subjected to crosslinking treatment by appropriate crosslinking means (for example, adding a crosslinking agent, etc.). By crosslinking treatment, the gel fraction of the PSA layer can preferably be adjusted.

As a crosslinking agent, for example, the following can be listed: an epoxy-based compound, an isocyanate-based compound, a metal chelate compound, a metal alkoxide, a metal salt, an amine compound, a hydrazine compound, an aldehyde-based compound, etc. These can be appropriately selected and used according to functional groups contained in an acrylic polymer. From the viewpoint of improving tight adhesiveness of a PSA layer to a plastic-based substrate, an epoxy-based compound and an isocyanate-based compound is used preferably. The crosslinking degree of the PSA itself can be improved by using an epoxy-based compound as a crosslinking agent.

A crosslinking agent plays an important role in controlling the gel fraction and adhesive strength. Considering this, with respect to 100 parts by weight of the acrylic polymer, the amount of the crosslinking agent used is, for example, about 0.01 to 20 parts by weight, preferably about 0.1 to 15 parts by weight, and particularly preferably about 0.1 to 10 parts by weight. If the amount of the crosslinking agent used is too low, the gel fraction is too low so that no enough cohesive strength can be obtained, thereby leading to residues of the PSA layer on an adherend. If the amount of the crosslinking agent used is too high, the PSA tends to be hard and the adhesive property decreases. In the particularly preferable embodiment, when the crosslinking agent is an isocyanate-based compound, with respect to 100 parts by weight of the acrylic polymer, the amount used thereof is about 1 to 20 parts by weight, preferably about 1 to 10 parts by weight, and especially preferably about 1 to 5 parts by weight. When the crosslinking agent is an epoxy-based compound, with respect to 100 parts by weight of the acrylic polymer, the amount used thereof is suitably 0.01 to 5 parts by weight, preferably 0.05 to 5 parts by weight, especially preferably 0.1 to 2 parts by weight, and particularly preferably 0.6 to 2 parts by weight. In a preferable embodiment, an auxiliary crosslinking agent can be used in addition to a crosslinking agent (preferably isocyanate-based compound). The amount of an auxiliary crosslinking agent used is not particularly limited, but, for instance, it can be 0.001 to 0.5 part by weight with respect to 1 part by weight of a crosslinking agent.

In a PSA layer, from the viewpoint of improving distinctness of marks on goods etc. and operationality by colouring, a colouring agent such as a pigment and the like can be added. The pigment can be used by selecting from common organic pigments or inorganic pigments well known in the art according to the desired colours. For example, carbon black, ferric oxide, titanium oxide, titan yellow, cobalt blue, cadmium red, azo lake (red or yellow), phthalocyanines, quinacridones and other pigments can be used.

In addition to the acrylic polymer, crosslinking agent and colouring agent, an acrylic PSA can also contain other components (e.g. a tackifier, a plasticizer, a tiller, an antioxidant, etc.) to the extent that does not affect the effect of the present invention.

A PSA layer can be formed as follows: according to the requirements, diluting the acrylic PSA with a solvent (e.g. toluene, xylene, ethyl acetate, methyl ethyl ketone, etc.) to prepare a coating solution, directly coating the coating solution on a substrate or an appropriate release liner (e.g. release paper, etc.) and drying, to form the PSA layer. A PSA layer can be a single layer, or can also be a lamination of two or more layers. When a PSA layer is a lamination of two ro more layers, each layer can have the same composition, or layers of different compositions can also be combined. When PSA layers are placed on both faces of a substrate, these PSA layers can have the same composition, or can have different compositions.

The thickness of a PSA layer (which is the total thickness thereof when it is a lamination of two or more layers) is preferably 1 μm to 20 μm (more preferably 1 μm to 15 μm). If the thickness is too small, an adhesive strength tends to be too low and the PSA tape may be peeled in an electrolyte, causing deterioration of the electrolyte. If the thickness is too large, the volume occupied thereby in an electrochemical device tends to be too large, making it difficult to adapt to high capacity of an electrochemical device.

From the viewpoint of improving re-peeling property of a PSA tape, the gel fraction of a PSA (layer) in a PSA tape is suitably 50% by weight or more and smaller than 100% by weight, preferably 80% by weight or more and smaller than 100% by weight, and more preferably 85% by weight to 97% by weight. By setting the gel fraction within the above-mentioned range, a PSA can have an appropriate cohesion, thereby improving re-peeling property when a PSA tape is peeled off from an adherend.

< PSA tape for electrochemical device >

In this description, an anchoring strength refers to an adhesive strength measured by the following method.

(Aanchoring strength)

A PSA tape is cut into 30 mm x 200 mm to serve as test sample 1. Likewise, a "NO. 315" PSA tape available from Nitto Denko Corporation (substrate: PET film, PSA: thermosetting rubber PSA, thickness: 0.058 mm, and adhesive strength: 11.0 N/19 mm) is also cut into 30 mm x 200 mm to serve as test sample 2. The PSA face of the test sample 1 is adhered to the PSA face of the test sample 2 by rolling with a 5 kg roller moved back and forth once to obtain test sample 3. The test sample 3 is cut into 10 mm x 150 mm, then the other face of the test sample 1 is attached to a stainless steel plate via a double-sided PSA, and is left in an environment of 23°C and 50% RH for 20 to 40 minutes, and the PSA layer of the test sample 1 is peeled with a tensile tester in the direction of 180° at a tensile speed of 300 mm/min. An adhesive strength (peel strength) is measured as an anchoring strength.

An anchoring strength of a PSA tape for an electrochemical device disclosed herein is 7.0 N/10 mm or more. It is preferably 8.5 N/10 mm or more, and more preferably 9.5 N/10 mm or more. By adjusting an anchoring strength within the above-mentioned range, a PSA can be prevented from peeling from a substrate when a PSA tape is peeled off from an adherend.

In the art disclosed herein, an anchoring strength is preferably greater than an adhesive strength. The anchoring strength is greater than the adhesive strength by 5.0 N/10 mm or more, and better greater by 8.5 N/10 mm or more. By adjusting the difference between the anchoring strength and the adhesive strength within the above-mentioned range, a PSA can be prevented from peeling from a substrate when a PSA tape is peeled off from an adherend.

An adhesive strength of a PSA tape is preferably 0.1 N/10 mm to 4.0 N/10 mm. By setting an adhesive strength within the above-mentioned range, an adherend can preferably be prevented from deforming and breaking during peeling.

The back face side of a substrate can be pre-coated with a back face treatment agent to reduce an unwinding force of a PSA tape. A back face treatment agent can be a release coating agent composed of a silicone-based, long-chain alky-based, fluorine-based or molybdenum sulfide-based release agent, etc. A long-chain alkyl-based treatment agent is preferred.

A PSA tape for an electrochemical device can be formed by means of a well-known conventional method. For example, the following methods can be listed: a method of diluting an acrylic PSA for composing the PSA layer with a solvent (e.g. toluene, xylene, ethyl acetate, methyl ethyl ketone, etc.) to prepare a coating solution according to the requirements, and directly applying the coating solution on a substrate to form the PSA layer. Alternatively, can be used a method of applying the coating solution on a piece of appropriate release paper (or a release liner) to form a PSA layer, and then transfer-printing (transferring) the PSA layer onto a substrate, etc. When the method of transfer-printing (transferring) a PSA layer is adopted, the interface between the PSA layer and the substrate possibly contains a gap; in this case, a heating and pressurizing treatment can be carried out by means of an autoclave treatment to distribute and dissipate the gap.

For application of the coating solution, can be used a common coater, such as a gravure roll coater, a reverse roll coater, a roll-kiss coater, a dip roll coater, a bar coater, a blade coater, a spray coater, a comma coater, a direct coater, etc.

For a PSA tape for an electrochemical device, from the viewpoint of protecting the surface of a PSA layer and preventing sticking, a release liner can be provided on the surface of a PSA layer. The release liner is peeled when a PSA tape for an electrochemical device is adhered to an adherend, and does not have to be thereon. There is no limit on a release liner used. Well-known conventional release paper, etc. can be used. For example, the following can be used: a substrate with a release layer, such as a plastic thin film, paper and so on, which has been subjected to surface treatment with a silicone-based, long-chain alkyl-based, fluorine-based or molybdenum sulfide-based release agent, etc.; a substrate with low bonding property formed by a fluorine-based polymer, such as polytetrafluoroethylene, polychlorotrifluoroethylene, polyvinyl chloride, polyvinylidene fluoride, tetrafluoroethylene-hexafluoropropylene copolymer, chlorofluoroethylene-vinylidene chloride copolymer, etc.; and a substrate with low bonding property formed by a nonpolar polymer such as an olefin-based resin (e.g. PE or PP), etc.

A PSA tape for an electrochemical device can preferably be used in the manufacturing of a secondary battery in which a non-aqueous electrolyte is enclosed, such as a lithium ion battery, and the manufacturing of an electrolytic capacitor (especially an aluminum electrolytic capacitor).

A non-aqueous electrolyte secondary battery, such as a lithium ion battery and the like, is constructed by enclosing an electrode group, electrode terminals led out from a positive electrode plate and a negative electrode plate, and an electrolyte into a battery case. An electrode group may be typically a laminated electrode group formed by laminating the positive electrode plate, the core of which is coated with a positive electrode active material, and a negative electrode plate, the core of which is coated with a negative electrode active material, with a separator sandwiched therebetween. Alternatively, an electrode group may be a wound structure electrode group obtained by winding a positive electrode plate, the core of which is coated with a positive electrode active material, and a negative electrode plate, the core of which is coated with a negative electrode active material, with a separator sandwiched therebetween, into a scroll shape.

The separator may be a porous film, such as a porous PE film, PP film, etc.

A PSA tape for an electrochemical device is, for example, used in the manufacturing of the non-aqueous electrolyte secondary battery, such as a lithium ion battery and the like, by adhering to a battery component, in order to prevent a separator from being pierced by foreign substances, burrs, etc., to prevent active materials from detachment, or to improve adaptability for loading an electrode into a battery case (for example, fixing a laminated body comprising a positive electrode plate, a separator and a negative electrode plate, or fixing a wound body of the laminated body). There is no particular limit on the position where a PSA tape is adhered to a battery component, as long as the above-mentioned purposes are achieved. For example, the position can be an electrode plate, an electrode terminal, an electrode plate end part, a separator composed of a porous film, the boundary portion between an active material-coated part and an uncoated part, the winding tail part of a wound structure electrode group, etc. Especially, when adhered to a separator composed of a porous film, a PSA tape for an electrochemical device disclosed herein is particularly preferable because it is easy to be peeled off from a separator, and capable of preventing deformation of a separator and adhesive residue of a PSA.

An aluminum electrolytic capacitor is a capacitor having features of using a thin oxidation film as a dielectric and using aluminum as an electrode, and has such a structure that an electrolyte penetrates a separator and then they are clamped by aluminum foils and wound. An aluminum electrolytic capacitor can obtain a larger capacity compared with the volume of a capacitor, as it can use a very thin dielectric material.

The separators may be a porous film made of Manila hemp paper, kraft paper or synthetic fibers, etc.

When adhered to a separator composed of the porous film, a PSA tape for an electrochemical device disclosed herein can be peeled off from the separator easily, and can prevent deformation of a separator and adhesive residue of a PSA.

EXAMPLES

The present invention is described in more details hereinafter by means of examples, but the present invention is not limited by these examples.

(Example 1)

95 parts by weight of 2-ethylhexyl acrylate, 5 parts by weight of acrylic acid, 0.1 part by weight of AIBN and 100 parts by weight of ethyl acetate were mixed, and nitrogen displacement was performed for 2 hours. Under the nitrogen stream, the polymerization was carried out at 60°C for 6 hours to obtain an acrylic polymer (1) with a weight average molecular weight of $100 \times 10^4$.

100 parts by weight of the acrylic polymer (1) and 3 parts by weight of an isocyanate-based compound containing three functional groups (trade name "CORONATE L", available from Nippon Polyurethane Industry Co., Ltd.) were mixed uniformly to obtain an acrylic PSA (1).

The acrylic PSA (1) was applied on a polypropylene (PP) film (thickness: 20 $\mu$m) as a substrate so that the thickness of a PSA layer after drying is 3 $\mu$m, and was dried to obtain a PSA tape (1).

(Example 2)

95 parts by weight of 2-ethylhexyl acrylate, 5 parts by weight of acrylic acid, 0.1 part by weight of AIBN and 100 parts by weight of ethyl acetate were mixed, and nitrogen displacement was performed for 2 hours. Under the nitrogen stream, the polymerization was carried out at 60°C for 6 hours to obtain the acrylic polymer (1) with a weight average molecular weight of $100 \times 10^4$.

100 parts by weight of the acrylic polymer (1) and 0.5 part by weight of a poly-functional epoxy-based compound (trade name "TETRAD C", available from Mitsubishi Gas Chemical Co., Inc.) were mixed uniformly to obtain an acrylic PSA (2).

The acrylic PSA (2) was applied on a polyester film (polyetheylene terephthalate (PET) film with a thickness of 12 μm) as a substrate so that the thickness of a PSA layer after drying is 10 μm, and was dried to obtain a PSA tape (2).

(Example 3)

90 parts by weight of 2-ethylhexyl acrylate, 10 parts by weight of acrylic acid, 0.1 part by weight of AIBN and 100 parts by weight of ethyl acetate were mixed, and nitrogen displacement was performed for 2 hours. Under the nitrogen stream, the polymerization was carried out at 60°C for 6 hours to obtain an acrylic polymer (2) with a weight average molecular weight of $120 \times 10^4$.

100 parts by weight of the acrylic polymer (2) and 0.5 part by weight of the poly-functional epoxy-based compound (trade name "TETRAD C", available from Mitsubishi Gas Chemical Co., Inc.) were mixed uniformly to obtain an acrylic PSA (3).

The acrylic PSA (3) was applied on a PP film (thickness: 20 μm) as a substrate so that the thickness of a PSA layer after drying is 10 μm, and was dried to obtain a PSA tape (3).

(Example 4)

86 parts by weight of 2-ethylhexyl acrylate, 14 parts by weight of acrylic acid, 0.1 part by weight of AIBN and 100 parts by weight of ethyl acetate were mixed, and nitrogen displacement was performed for 2 hours. Under the nitrogen stream, the polymerization was carried out at 60°C for 6 hours to obtain an acrylic polymer (3) with a weight average molecular weight of $100 \times 10^4$.

100 parts by weight of the acrylic polymer (3) and 1.8 parts by weight of the poly-functional epoxy-based compound (trade name "TETRAD C", available from Mitsubishi Gas Chemical Co., Inc.) were mixed uniformly to obtain an acrylic PSA (4).

The acrylic PSA (4) was applied on a PP film (thickness: 20 μm) as a substrate so that the thickness of a PSA layer after drying is 20 μm, and was dried to obtain a PSA tape (4).

(Example 5)

84 parts by weight of 2-ethylhexyl acrylate, 16 parts by weight of acrylic acid, 0.1 part by weight of AIBN and 100 parts by weight of ethyl acetate were mixed, and nitrogen displacement was performed for 2 hours. Under the nitrogen stream, the polymerization was carried out at 60°C for 6 hours to obtain an acrylic polymer (4) with a weight average molecular weight of $80 \times 10^4$.

100 parts by weight of the acrylic polymer (4) and 1.0 part by weight of the poly-functional epoxy-based compound (trade name "TETRAD C", available from Mitsubishi Gas Chemical Co., Inc.) were mixed uniformly to obtain an acrylic PSA (5).

The acrylic PSA (5) was applied on a polyester film (PET film with a thickness of 12 μm) as a substrate so that the thickness of a PSA layer after drying is 10 μm, and was dried to obtain a PSA tape (5).

(Example 6)

30 parts by weight of 2-ethylhexyl acrylate, 60 parts by weight of ethyl acrylate, 5 parts by weight of hydroxyethyl acrylate, 5 parts by weight of methyl methacrylate, 0.1 part by weight of AIBN and 100 parts by weight of ethyl acetate were mixed, and nitrogen displacement was performed for 2 hours. Under the nitrogen stream, the polymerization was carried out at 60°C for 6 hours to obtain an acrylic polymer (5) with a weight average molecular weight of $40 \times 10^4$.

100 parts by weight of the acrylic polymer (5), 2 parts by weight of the isocyanate-based compound containing three functional groups (trade name "CORONATE L", available from Nippon Polyurethane Industry Co., Ltd.) and 0.05 part by weight of an auxiliary crosslinking agent (trade name "EMBILIZER OL-1", available from Tokyo Fine Chemical Co., Ltd.) were mixed uniformly to obtain an acrylic PSA (6).

The acrylic PSA (6) was applied on a polyester film (PET film with a thickness of 12 μm) as a substrate so that the thickness of a PSA layer after drying is 10 μm, and was dried to obtain a PSA tape (6).

(Example 7)

30 parts by weight of 2-ethylhexyl acrylate, 55 parts by weight of ethyl acrylate, 10 parts by weight of hydroxyethyl acrylate, 5 parts by weight of methyl methacrylate, 0.1 part by weight of AIBN and 100 parts by weight of toluene were mixed, and nitrogen displacement was performed for 2 hours. Under the nitrogen stream, the polymerization was carried out at 60°C for 6 hours to obtain an acrylic polymer (6) with a weight average molecular weight of $40 \times 10^4$.

100 parts by weight of the acrylic polymer (6), 1 part by weight of the isocyanate-based compound containing three functional groups (trade name "CORONATE L", available from Nippon Polyurethane Industry Co., Ltd.) and 0.05 part by weight of an auxiliary crosslinking agent (trade name "EMBILIZER OL-1", available from Tokyo Fine Chemical Co., Ltd.) were mixed uniformly to obtain an acrylic PSA (7).

The acrylic PSA (7) was applied on a PP film (thickness: 20 $\mu$m) as a substrate so that the thickness of a PSA layer after drying is 10 $\mu$m, and was dried to obtain a PSA tape (7).

(Comparative example 1)

95 parts by weight of 2-ethylhexyl acrylate, 5 parts by weight of acrylic acid, 0.1 part by weight of AIBN and 100 parts by weight of ethyl acetate were mixed, and nitrogen displacement was performed for 2 hours. Under the nitrogen stream, the polymerization was carried out at 60°C for 6 hours to obtain an acrylic polymer (1) with a weight average molecular weight of $100 \times 10^4$.

100 parts by weight of the acrylic polymer (1) and 0.5 part by weight of the isocyanate-based compound containing three functional groups (trade name "CORONATE L", available from Nippon Polyurethane Industry Co., Ltd.) were mixed uniformly to obtain an acrylic PSA (8).

The acrylic PSA (8) was applied on a PP film (thickness: 20 $\mu$m) as a substrate so that the thickness of a PSA layer after drying is 10 $\mu$m, and was dried to obtain a PSA tape (8).

(Comparative example 2)

90 parts by weight of 2-ethylhexyl acrylate, 10 parts by weight of acrylic acid, 0.1 part by weight of AIBN and 100 parts by weight of ethyl acetate were mixed, and nitrogen displacement was performed for 2 hours. Under the nitrogen stream, the polymerization was carried out at 60°C for 6 hours to obtain an acrylic polymer (2) with a weight average molecular weight of $120 \times 10^4$.

100 parts by weight of the acrylic polymer (2) and 0.1 part by weight of the poly-functional epoxy-based compound (trade name "'TETRAD C", available from Mitsubishi Gas Chemical Co., Inc.) were mixed uniformly to obtain an acrylic PSA (9).

The acrylic PSA (9) was applied on a PP film (thickness: 20 $\mu$m) as a substrate so that the thickness of a PSA layer after drying is 5 $\mu$m, and was dried to obtain a PSA tape (9).

For the acrylic PSAs and PSA tapes obtained in the examples and comparative examples, the gel fraction, anchoring strength and adhesive strength thereof, the adhesive residue on the adherend, and deformation of the adherend were evaluated by the following methods. Weight average molecular weight of acrylic polymer of the examples and comparative examples is also measured by the following method. The results are shown in Table 2.

< Weight average molecular weight >

The test is performed by a gel permeation chromatography (GPC) method. More particularly, the weight average molecular weight based on polystyrene can be measured under the following GPC measurement conditions using a GPC measurement device under the trade name "HLC-8120GPC" (available from Tosoh Corporation).

(GPC measurement condition)

Sample concentration: 0.2% by weight (tetrahydrofuran solution)
Sample injection amount: 10 $\mu$L
Eluent: tetrahydrofuran (THE)
Flow rate (flow velocity): 0.6 mL/min
V column temperature (measurement temperature): 40°C
Column: trade name "TSKgelSuperHM-H/H4000/H3000/H2000" (available from Tosoh Corporation)
Detector: differential refractometer (RI)

< Anchoring strength >

A PSA tape in each of the examples and comparative examples is cut into 30 mm $\times$ 200 mm to serve as test sample 1. Likewise, a "NO. 315" PSA tape available from Nitto Denko Corporation (substrate: PET film, PSA: thermosetting rubber PSA, thickness: 0.058 mm and an adhesive strength: 11.0 N/19 mm) is also cut into 30 mm $\times$ 200 mm to serve as test sample 2. The PSA face of the test sample 1 is adhered to the PSA face of the test sample 2 by a 5 kg roller moved back and forth once to obtain test sample 3. This test sample 3 is cut into 10 mm × 150 mm, then the other face of the test sample 1 is attached to a stainless steel plate via a double-sided PSA, and is left in an environment of 23°C and 50% RH for 20 to 40 minutes, and an adhesive strength (peel strength) when peeling the PSA layer of the test sample 1 is measured with a tensile tester in a peeling direction of 180° at a tensile speed of 300 mm/min, and is taken as an anchoring strength.

< Gel fraction (Gel)>

A PSA tape in each of the examples and comparative examples is aged at 50°C for 2 days. The PSA tape is cut into a sample of 50 mm × 50 mm and weighed to obtain the weight thereof M1. A porous polytetrafluoroethylene (PTFE) film with an average pore size of 02 μm (trade name "NTF1122", available from Nitto Denko Corporation) of about 100 mm × 100 mm is taken. The PSA layer of the cut PSA tape is adhered to the middle of the PTFE film, and is wrapped in the PTFE film and bound with a kite string. The total weight M2 of the PTFE film and the kite string needs to be weighed in advance. The bound PTFE package containing the PSA tape is placed into a container containing about 50 mL of toluene, and is stored at 23°C for 7 days. Thereafter, the PTFE package is taken out of the container, transferred into a cup made of aluminum, and dried in a drying oven of 130°C for 2 hours to remove toluene, and then is weighed to obtain the total weight thereof M3. Another PSA tape in each of the examples and comparative examples is prepared and cut into another sample of 50 mm × 50 mm. This is taken and weighed after the PSA layer on the PSA tape had been wiped off with toluene to obtain the weight thereof M4. The gel fraction (Gel) is determined according to the following formula:

$$Gel = (M3-M2-M4)/(M1-M4) \times 100\%$$

< Adhesive strength of PSA tape >

A sample of 10 mm × 150 mm cut from a PSA tape obtained in each of the examples and comparative examples is adhered to a stainless steel plate (SUS430) by a 2 kg roller moved back and forth once, and then is left in an environment of 23°C and 50% RH for 20 to 40 minutes, and a peel strength of peeling of the PSA tape with a tensile tester in a peeling direction of 180° at a tensile speed of 300 mm/min is measured, and is taken as an adhesive strength.

< Adhesive residue on adherend >

A PSA tape is cut into an appropriate size and adhered to a lithium ion battery separator (a battery separator "Hipore™" available from Asahi Kasei Corporation), is left still for 5 minutes or more, and then is peeled by hand, and adhesive residue is determined by visual observation and hand touch. In the evaluation carried out by visual observation and hand touch, as shown in Table 1, a sample which had substantially no adhesive residue on adherend was evaluated as E (Excellent), a sample which had minute adhesive residue on adherend was evaluated as G (Good), and a sample which had a considerable amount of adhesive residue on adherend was evaluated as P (Poor).

< Deformation of adherend >

A PSA tape is cut into an appropriate size and adhered to a lithium ion battery separator (a battery separator "Hipore™" available from Asahi Kasei Corporation), left still for 5 minutes or more, and then peeled by hand, and deformation of the adherend is determined by visual observation. In the evaluation by visual observation, a sample for which adherend did not change at all was evaluated as E (Excellent), a sample for which deformation and folding of adherend occurred was evaluated as G (Good), and a sample for which breaking of adherend happened was evaluated as P (Poor).

Table 1

| Characteristics | Judgement | Description |
|---|---|---|
| Adhesive residue on adherend | E | No adhesive residue on adherend |
| | G | Minute adhesive residue on adherend |
| | P | Great adhesive residue on adherend |

Table 2

| | | Examples | | | | | | | Com. Examples | |
|---|---|---|---|---|---|---|---|---|---|---|
| | | 1 | 2 | 3 | 4 | 5 | 6 | 7 | 1 | 2 |
| PSA layer (part) | Acrylic polymer (1) | 100 | 100 | | | | | | 100 | |
| | Acrylic polymer (2) | | | 100 | | | | | | 100 |
| | Acrylic polymer (3) | | | | 100 | | | | | |
| | Acrylic polymer (4) | | | | | 100 | | | | |
| | Acrylic polymer (5) | | | | | | 100 | | | |
| | Acrylic polymer (6) | | | | | | | 100 | | |
| | CORONATEL | 3 | | | | | | | | |
| | TETRAD C | | 0.5 | 0.5 | 1.8 | 1.0 | 2 | 1 | 0.5 | 0.1 |
| | EMBILIZER OL-1 | | | | | | 0.05 | 0.05 | | |
| PSA layer thickness (mm) | | 0.003 | 0.010 | 0.010 | 0.020 | 0.010 | 0.010 | 0.010 | 0.010 | 0.005 |
| Substrate | | PP | PET | PP | PP | PET | PET | PP | PP | PP |
| Characteristics | Gel (%) | 63 | 65 | 80 | 90 | 88 | 94 | 90 | 37 | 45 |
| | Anchoring strength (N/10 mm) | 8.5 | 9.5 | 9.0 | 9.8 | 10.5 | 12.0 | 10.0 | 6.5 | 6.9 |
| | Adhesive strength (N/10 mm) | 1.2 | 1.8 | 2.1 | 0.69 | 0.5 | 1.2 | 1.3 | 2.7 | 2.5 |
| | Adhesive residue on adherend | G | G | G | E | E | E | E | P | P |
| | Deformation of adherend | E | G | G | E | E | E | E | P | P |
| Comprehensive evaluation | | G | G | G | E | E | E | E | P | P |

Although specific embodiments of the present invention have been described in detail above, these are merely for illustrations and do not limit the scope of the claims. The art according to the claims includes various modifications and changes made to the specific embodiments illustrated above.

[Reference Signs List]

1:      substrate
2:      PSA layer
10:    PSA tape

**Claims**

1. A pressure-sensitive adhesive tape for an electrochemical device, the pressure-sensitive adhesive tape comprising a substrate and a pressure-sensitive adhesive layer placed on at least one face of the substrate, and an anchoring strength of the pressure-sensitive adhesive layer to the substrate being 7.0 N/10 mm or more.

2. The pressure-sensitive adhesive tape for an electrochemical device according to Claim I, wherein the gel fraction of the pressure-sensitive adhesive layer is 50% by weight or higher and lower than 100% by weight.

3. The pressure-sensitive adhesive tape for an electrochemical device according to Claim 1 or 2, wherein the pressure-sensitive adhesive tape exhibits an adhesive strength of 0.1 N/10 mm to 4 N/10 mm.

4. The pressure-sensitive adhesive tape for an electrochemical device according to any one of Claims 1 to 3, wherein the pressure-sensitive adhesive tape exhibits a higher anchoring strength than an adhesive strength, and the difference between the anchoring strength and the adhesive strength is 5.0 N/10 mm or more.

5. The pressure-sensitive adhesive tape for an electrochemical device according to any one of Claims 1 to 4, wherein the pressure-sensitive adhesive layer is composed of an acrylic pressure-sensitive adhesive containing an acrylic polymer obtainable by polymerizing an alkyl (meth)acrylate monomer and a monomer containing a functional group, the functional group being capable of reacting with a crosslinking agent.

6. The pressure-sensitive adhesive tape for an electrochemical device according to Claim 5, wherein the functional group capable of reacting with a crosslinking agent is a hydroxyl group or carboxyl group.

7. The pressure-sensitive adhesive tape for an electrochemical device according to Claim 5 or 6, wherein the acrylic pressure-sensitive adhesive further contains a crosslinking agent.

8. The pressure-sensitive adhesive tape for an electrochemical device according to Claim 7, wherein an amount of the crosslinking agent is 0.01 to 20 parts by weight with respect to 100 parts by weight of the acrylic polymer.

9. The pressure-sensitive adhesive tape for an electrochemical device according to any one of Claims 1 to 8, wherein the electrochemical device comprises a porous film as an adherend.

10. An electrochemical device manufactured by using the pressure-sensitive adhesive tape for an electrochemical device according to any one of Claims 1 to 9.

[Fig. 1]

**EP 2 784 140 A1**

Europäisches
Patentamt
European
Patent Office
Office européen
des brevets

# EUROPEAN SEARCH REPORT

Application Number

EP 14 15 8049

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 514 793 A1 (NITTO DENKO CORP [JP]) 24 October 2012 (2012-10-24) * paragraphs [0031] - [0036]; claims 1-5; figures 1-3; examples 1-3 * | 1-10 | INV. C09J7/02 |
| X | EP 2 423 287 A1 (NITTO DENKO CORP [JP]) 29 February 2012 (2012-02-29) * claims 1,2; examples 1-5 * | 1-4,9,10 | |
| A | EP 2 463 347 A2 (NITTO DENKO CORP [JP]) 13 June 2012 (2012-06-13) * paragraph [0093] * | 1-10 | |

|  | |
|---|---|
| | TECHNICAL FIELDS SEARCHED (IPC) |
| | C09J |

The present search report has been drawn up for all claims

| Place of search | Date of completion of the search | Examiner |
|---|---|---|
| Munich | 4 July 2014 | Sperry, Pascal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

15

## ANNEX TO THE EUROPEAN SEARCH REPORT
## ON EUROPEAN PATENT APPLICATION NO.

EP 14 15 8049

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2014

| Patent document cited in search report | | Publication date | Patent family member(s) | | Publication date |
|---|---|---|---|---|---|
| EP 2514793 | A1 | 24-10-2012 | CN | 102746800 A | 24-10-2012 |
| | | | CN | 102746801 A | 24-10-2012 |
| | | | CN | 202246521 U | 30-05-2012 |
| | | | EP | 2514793 A1 | 24-10-2012 |
| | | | EP | 2514794 A1 | 24-10-2012 |
| | | | US | 2012270036 A1 | 25-10-2012 |
| | | | US | 2012270042 A1 | 25-10-2012 |
| EP 2423287 | A1 | 29-02-2012 | CN | 102382588 A | 21-03-2012 |
| | | | EP | 2423287 A1 | 29-02-2012 |
| | | | JP | 2012067291 A | 05-04-2012 |
| | | | KR | 20120042640 A | 03-05-2012 |
| | | | US | 2012058335 A1 | 08-03-2012 |
| EP 2463347 | A2 | 13-06-2012 | CN | 102585711 A | 18-07-2012 |
| | | | EP | 2463347 A2 | 13-06-2012 |
| | | | JP | 2012122027 A | 28-06-2012 |
| | | | US | 2012148791 A1 | 14-06-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201310107919

- JP H11176476 B